# EUROPEAN PATENT SPECIFICATION

(11) **EP 2 928 240 B1**
(45) Date of publication and mention of the grant of the patent: **22.04.2020**
(21) Application number: 13861217.1
(22) Date of filing: 08.07.2013
(51) Int. Cl.: H04W 48/16, H04W 48/14

(54) **METHOD AND DEVICE FOR SCANNING MULTIPLE BANDS IN WIRELESS LAN SYSTEM**
VERFAHREN UND VORRICHTUNG ZUM ABTASTEN MEHRERER BÄNDER IN EINEM WLAN-SYSTEM
PROCÉDÉ ET DISPOSITIF DE BALAYAGE DE BANDES MULTIPLES DANS UN SYSTÈME DE RÉSEAU LOCAL SANS FIL

(30) Priority: 03.12.2012 US 201261732410 P; 11.12.2012 US 201261735993 P
(43) Date of publication of application: 07.10.2015
(73) Proprietor: LG Electronics Inc., Seoul 150-721 (KR)
(72) Inventor: SEOK, Yongho, Anyang-si Gyeonggi-do 431-080 (KR)
(74) Representative: Plasseraud IP
(86) International application number: PCT/KR2013/006045
(87) International publication number: WO 2014/088175

(56) References cited:
- WO-A2-2011/115448
- KR-A- 20060 031 867
- KR-A- 20080 114 469
- KR-A- 20110 085 836
- CISCO: "FILS Reduced Neighbor Report ; 11-12-1054-02-00ai-fils-reduced-neighbor-r eport", IEEE SA MENTOR; 11-12-1054-02-00AI-FILS-REDUCED-NEIGHBOR-R EPORT, IEEE-SA MENTOR, PISCATAWAY, NJ USA, vol. 802.11ai, no. 2, 18 September 2012 (2012-09-18), pages 1-20, XP068039738, [retrieved on 2012-09-18]
- GIWON PARK (LG): "Band adjustment between 2.4GHz and 5GHz ; 11-12-1042-03-00ai-band-adjustment-between -2-4ghz-and-5ghz", IEEE SA MENTOR; 11-12-1042-03-00AI-BAND-ADJUSTMENT-BETWEEN -2-4GHZ-AND-5GHZ, IEEE-SA MENTOR, PISCATAWAY, NJ USA, vol. 802.11ai, no. 3, 19 September 2012 (2012-09-19), pages 1-9, XP068039701, [retrieved on 2012-09-19]

## Description

### TECHNICAL FIELD

The present invention relates to a wireless communication system and, more particularly, to a multi-band scanning method and apparatus in a wireless local area network system.

### BACKGROUND ART

Along with recent advances in information and communication technologies, various wireless communication technologies have been developed. Thereamong, a wireless local area network (WLAN) enables users to wirelessly access the Internet through portable terminals such as personal digital assistants (PDAs), laptop computers, and portable multimedia players (PMPs) in homes, offices, or specific service areas, based on wireless frequency technology.

To overcome limited communication speed, which is a weakness of WLAN, systems for increasing speed and reliability of a network and extending wireless network coverage have been introduced in recent technology standards. For example, institute of electrical and electronics engineers (IEEE) 802.11n supports high throughput (HT) with a data processing rate of up to 540Mbps and adopts multiple input and multiple output (MIMO) technology in both a transmitter and a receiver in order to minimize transmission errors and to optimize data rate.
The document WO 2011/115448 discloses a method and apparatus for receiving multi-band information in a WLAN system.
The document CISCO : "FILS Reduced Neighbor Report ; 11-12-1054-02-00ai-fils-reduced-neighbor-report", IEEE SA MENTOR, vol. 802.11ai, 18 September 2012, pages 1-20, proposes a modified neighbor report for FILS.
The document GIWON PARK (LG) : "Band adjustment between 2.4 GHZ and 5GHz; 11-12-1042-03-00ai-band-adjustment-between-2-4ghz-and-5ghz", IEEE SA MENTOR; vol.802.11ai, no.3, 19 September 2012, introduces band redirection for fast swan, between 2.4GHz and 5GHz.

### DETAILED DESCRIPTION OF THE INVENTION

### Technical Problems

A technical object of the present invention is to provide a method and apparatus for causing a device supporting multiple bands to accurately and efficiently perform scanning in a WLAN system.

The technical objects that can be achieved through the present invention are not limited to what has been particularly described hereinabove and other technical objects not described herein will be more clearly understood by persons skilled in the art from the following detailed description.

### Technical Solutions

The invention provides methods according to claims 1 and 11, a station according to claim 12 and an access point according to claim 13. According to an aspect of the present invention, provided herein is a method for performing scanning by a station (STA) in a wireless communication system, the method comprising: transmitting a first frame to a first access point (AP); and receiving a second frame from the first AP in response to the first frame, wherein the first frame includes information about one or more operating classes supported by the STA and service set identifier (SSID) information, and wherein the second frame includes a filtering indicator and information about a second AP.

In another aspect of the present invention, a method for supporting scanning of a station (STA) by an access point (AP) in a wireless communication system, the method comprising: receiving a first frame from the STA; and transmitting a second frame to the STA in response to the first frame, wherein the first frame includes information about one or more operating classes supported by the STA and service set identifier (SSID) information, and wherein the second frame includes a filtering indicator and information about another AP.

In another aspect of the present invention, a station (STA) for performing scanning in a wireless communication system, the STA comprising: a transceiver; and a processor, wherein the processor is configured to control the transceiver to transmit a first frame to a first access point (AP) and receive a second frame from the first AP in response to the first frame, wherein the first frame includes information about one or more operating classes supported by the STA and service set identifier (SSID) information, and wherein the second frame includes a filtering indicator and information about a second AP.

In another aspect of the present invention, an access point (AP) for supporting scanning in a wireless communication system, the AP comprising: a transceiver; and a processor, wherein the processor is configured to control the transceiver to receive a first frame from the STA and transmit a second frame to the STA in response to the first frame, wherein the first frame includes information about one or more operating classes supported by the STA and service set identifier (SSID) information, and wherein the second frame includes a filtering indicator and information about another AP.

The followings may be commonly applied to the above aspects of the present invention.

In another aspect of the present invention, the second frame includes information about the second AP having an SSID matching the SSID information included in the first frame when the filtering indicator indicates a first value.

In another aspect of the present invention, the second frame includes information about the second AP having one or more operating classes corresponding to the information about the operating classes supported by the STA.

In another aspect of the present invention, the second frame includes one or more operating classes field and a channel number field of the second AP.

In another aspect of the present invention, the second frame further includes target beacon transmission time (TBTT) offset information.

In another aspect of the present invention, the TBTT offset has a value indicating a time difference between an immediately previous TBTT of the first AP and a next TBTT of the second AP.

In another aspect of the present invention, further comprising passive scanning for discovery of the second AP using information obtained through the second frame.

In another aspect of the present invention, the first frame further includes access network type information and the second frame includes information about the second AP having an access network type corresponding to the access network type information included in the first frame.

In another aspect of the present invention, the second frame includes information about one or more second APs.

In another aspect of the present invention, the second AP is a neighboring AP of the first AP.

In another aspect of the present invention, the first frame and the second frame are transmitted and received in a first band and the second AP is an AP operating in a second band.

In another aspect of the present invention, the first frame is a probe request frame and the second frame is a probe response frame.

The foregoing general description and following detailed description of the present invention are exemplary and explanatory and are intended to provide further explanation of invention claimed.

### Advantageous Effects

According to the present invention, a method and apparatus for causing a device supporting multiple bands to accurately and efficiently perform scanning in a WLAN system can be provided.

Effects according to the present invention are not limited to what has been particularly described hereinabove and other advantages not described herein will be more clearly understood by persons skilled in the art from the following detailed description of the present invention.

### Description of Drawings

The accompanying drawings, which are included to provide a further understanding of the invention, illustrate embodiments of the invention and together with the description serve to explain the principle of the invention.
FIG. 1 is a diagram illustrating an exemplary configuration of an IEEE 802.11 system to which the present invention is applicable.
FIG. 2 is a diagram illustrating another exemplary configuration of an IEEE 802.11 system to which the present invention is applicable.
FIG. 3 is a diagram illustrating another exemplary configuration of an IEEE 802.11 system to which the present invention is applicable.
FIG. 4 is a diagram illustrating an exemplary configuration of a WLAN system.
FIG. 5 is a diagram illustrating a general link setup process.
FIG. 6 is a diagram illustrating a backoff process.
FIG. 7 is a diagram illustrating a hidden node and an exposed node.
FIG. 8 is a diagram illustrating request to send (RTS) and clear to send (CTS).
FIG. 9 is a diagram illustrating a multi-band scanning method according to the present invention.
FIG. 10 is a diagram illustrating an exemplary format of a supported operating class information element.
FIG. 11 is a diagram illustrating an exemplary format of a multi-band channel information element.
FIG. 12 is a diagram illustrating another exemplary multi-band channel information element.
FIG. 13 is a diagram illustrating another exemplary multi-band channel information element.
FIG. 14 is a block diagram illustrating a radio device according to an embodiment of the present invention.

### BEST MODE FOR CARRYING OUT THE INVENTION

The invention now will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art.

Embodiments described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment.

Specific terms used in the embodiments of the present invention are provided to aid in understanding of the present invention. These specific terms may be replaced with other terms within the scope of the present invention.

In some cases, to prevent the concept of the present invention from being obscured, structures and apparatuses of the known art will be omitted, or will be shown in the form of a block diagram based on main functions of each structure and apparatus. In addition, wherever possible, the same reference numbers will be used throughout the drawings and the specification to refer to the same or like parts.

The embodiments of the present invention can be supported by standard documents disclosed for at least one of wireless access systems, Institute of Electrical and Electronics Engineers (IEEE) 802, 3GPP, 3GPP LTE, LTE-A, and 3GPP2. Steps or parts that are not described to clarify the technical features of the present invention can be supported by those documents. Further, all terms as set forth herein can be explained by the standard documents.

Techniques described herein can be used in various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier-Frequency Division Multiple Access (SC-FDMA), etc. CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved-UTRA (E-UTRA) etc. For clarity, this application focuses on the IEEE 802.11 system. However, the technical features of the present invention are not limited thereto.

### Configuration of WLAN system

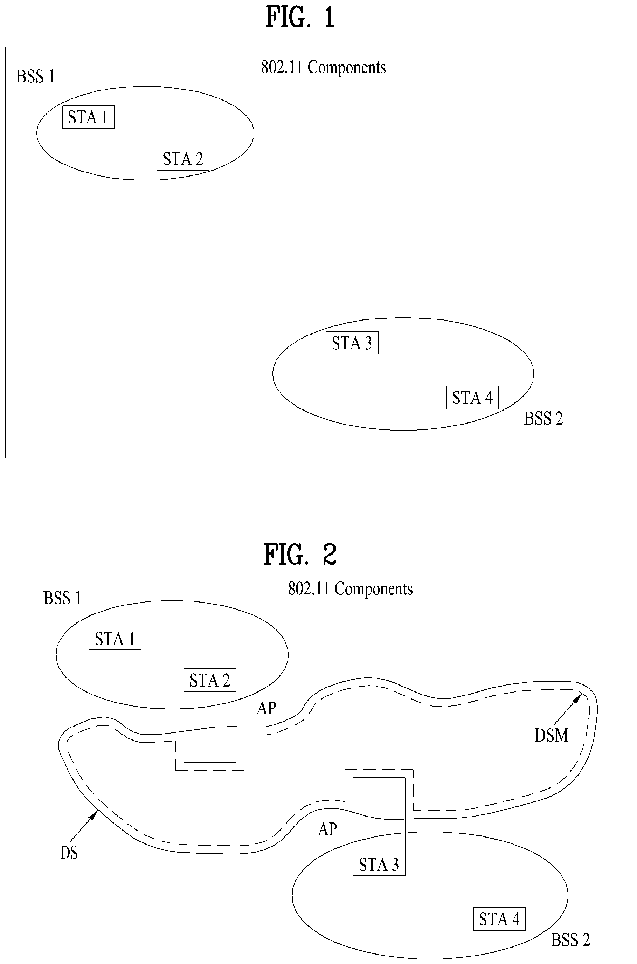

FIG. 1 illustrates an exemplary configuration of an IEEE 802.11 system to which the present invention is applicable.

IEEE 802.11 can be composed of a plurality of components and provide a WLAN supporting station (STA) mobility transparent for higher layers according to interaction of the components. A basic service set (BSS) may correspond to a basic component block in an IEEE 802.11 LAN. FIG. 1 shows 2 BSSs (BSS1 and BSS2) each of which includes 2 STAs as members (STA1 and STA2 being included in BSS1 and STA3 and STA4 being included in BSS2). In FIG. 1, an oval that defines a BSS indicates a coverage area in which STAs belonging to the corresponding BSS perform communication. This area may be called a basic service area (BSA). When an STA moves out of the BSA, the STA cannot directly communicate with other STAs in the BSA.

A most basic BSS in the IEEE 802.11 LAN is an independent BSS (IBSS). For example, the IBSS can have a minimum configuration including only 2 STAs. The IBSS has a simplest form and corresponds to the BSS (BSS1 or BSS2) shown in FIG. 1, in which components other than STA are omitted. This configuration is possible when STAs can directly communicate with each other. This type of LAN can be configured as necessary rather than being previously designed and configured and may be called an ad-hoc network.

When an STA is turned on or off, or enters or exits the coverage of a BSS, membership of the STA in the BSS can be dynamically changed. To become a member of the BSS, the STA can join the BSS using a synchronization process. To access all services based on the BSS, the STA needs to associate with the BSS. Association may be dynamically set and may use a distribution system service (DSS).

FIG. 2 illustrates another exemplary configuration of an IEEE 802.11 system to which the present invention is applicable. FIG. 2 shows a distribution system (DS), a distribution system medium (DSM) and an access point (AP) in addition to the configuration of FIG. 1.

In a LAN, a direct station-to-station distance may be limited by PHY performance. While this distance limit can be sufficient in some cases, communication between stations having a long distance therebetween may be needed in some cases. The DS may be configured to support an extended coverage.

The DS refers to a structure in which BSSs are connected to each other. Specifically, BSSs may be present as components of an extended form of a network composed of a plurality of BSSs rather than being independently present as shown in FIG. 1.

The DS is a logical concept and may be specified by characteristics of the DSM. IEEE 802.11 logically discriminates a wireless medium (WM) from the DSM. The logical media are used for different purposes and used by different components. IEEE 802.11 does not limit the media as the same medium or different media. The fact that plural media are logically different from each other can explain flexibility of IEEE 802.11 LAN (DS structure or other network structures). That is, the IEEE 802.11 LAN can be implemented in various manners and physical characteristics of implementations can independently specify corresponding LAN structures.

The DS can support mobile devices by providing seamless integration of a plurality of BSSs and logical services necessary to handle addresses to a destination.

The AP refers to an entity that enables associated STAs to access the DS through a WM and has STA functionality. Data can be transmitted between a BSS and the DS through the AP. For example, STA2 and STA3 shown in FIG. 2 have STA functionality and provide a function of enabling associated STAs (STA1 and STA4) to access the DS. Furthermore, all APs are addressable entities because they basically correspond to an STA. An address used by an AP for communication on the WM is not necessarily equal to an address used by the AP for communication on the DSM.

Data transmitted from one of STAs associated with an AP to an STA address of the AP can be received at an uncontrolled port at all times and processed by an IEEE 802.1X port access entity. Furthermore, the transmitted data (or frame) can be delivered to the DS when a controlled port is authenticated.

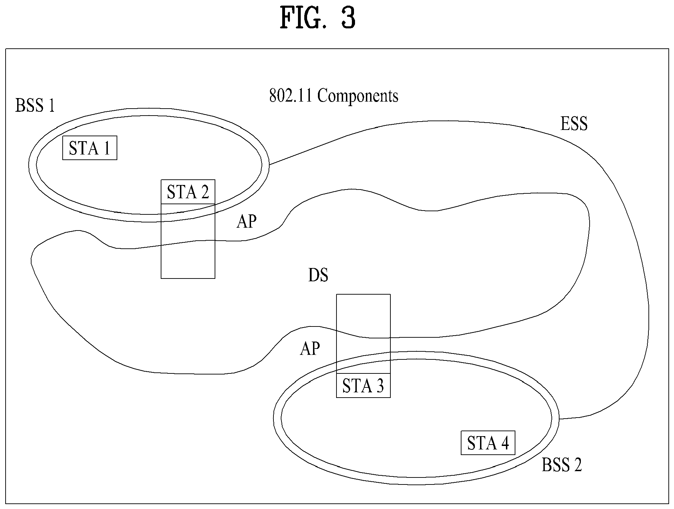

FIG. 3 illustrates another exemplary configuration of an IEEE 802.11 system to which the present invention is applicable. FIG. 3 shows an extended service set (ESS) for providing an extended coverage in addition to the configuration of FIG. 2.

A wireless network having an arbitrary size and complexity may be composed of a DS and BSSs. This type of network is called an ESS network in IEEE 802.11. The ESS may correspond to a set of BSSs connected to a DS. However, the ESS does not include the DS. The ESS network looks like an IBSS network at a logical link control (LLC) layer. STAs belonging to the ESS can communicate with each other and mobile STAs can move from a BSS to another BSS (in the same ESS) transparently to LCC.

IEEE 802.11 does not define relative physical positions of BSSs in FIG. 3 and the BSSs may be located as follows. The BSSs can partially overlap, which is a structure normally used to provide continuous coverage. The BSSs may not be physically connected to each other and there is a limit on the logical distance between the BSSs. In addition, the BSSs may be physically located at the same position in order to provide redundancy. Furthermore, one (or more) IBSS or ESS networks may be physically located in the same space as one (or more ESS) network. This may correspond to an ESS network form when an ad-hoc network operates in the location of the ESS network, IEEE 802.11 networks, which physically overlap, are configured by different organizations or two or more different access and security policies are needed at the same position.

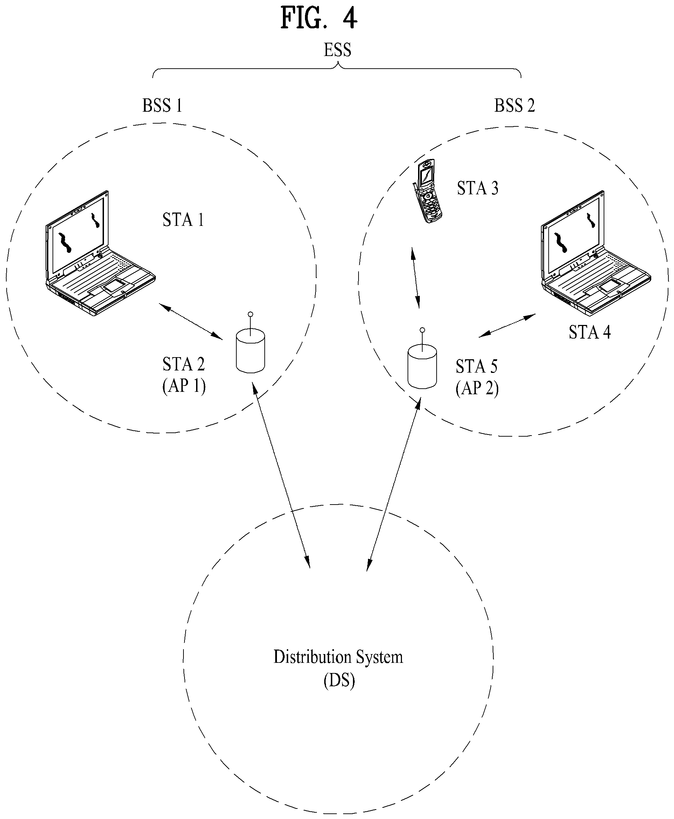

FIG. 4 illustrates an exemplary configuration of a WLAN system. FIG. 4 shows an example of a BSS based on a structure including a DS.

In the example of FIG. 4, BSS1 and BSS2 constitute an ESS. In the WLAN system, STAs are devices operating according to MAC/PHY regulations of IEEE 802.11. The STAs include an AP STA and a non-AP STA. The non-AP STA corresponds to a device directly handled by a user, such as a laptop computer, a cellular phone, etc. In the example of FIG. 4, STA1, STA3 and STA4 correspond to the non-AP STA and STA2 and STA5 correspond to the AP STA.

In the following description, the non-AP STA may be called a terminal, wireless transmit/receive unit (WTRU), user equipment (UE), mobile station (MS), motile terminal, mobile subscriber station (MSS), etc. The AP corresponds to a base station (BS), node-B, evolved node-B, base transceiver system (BTS), femto BS, etc. in other wireless communication fields.

### Link setup procedure

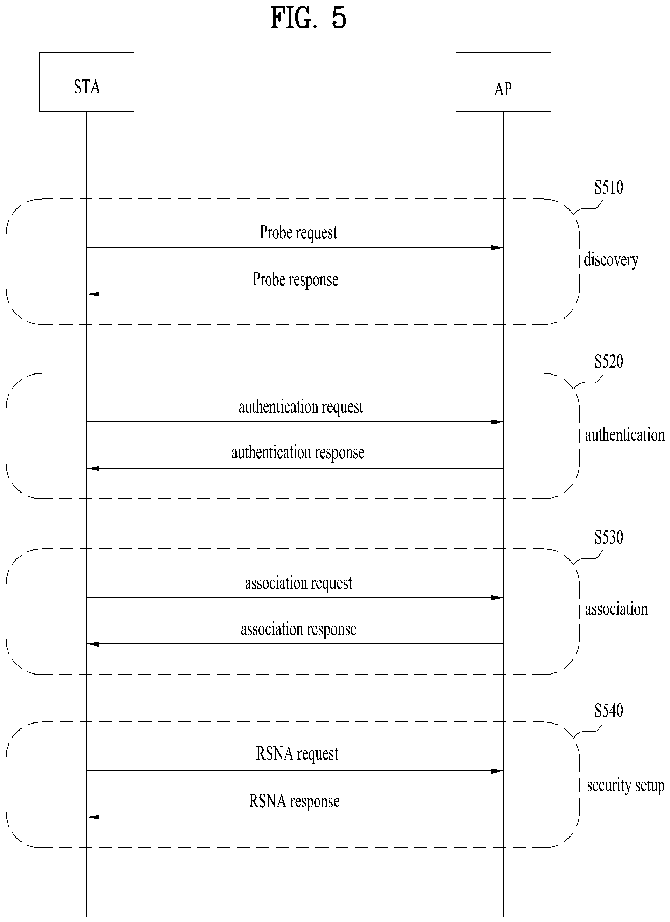

FIG. 5 illustrates a general link setup procedure.

To sets up a link to a network and transmit/receive data, an STA needs to discover the network, perform authentication, establish association and pass through an authentication procedure for security. The link setup procedure may be called a session initiation procedure and a session setup procedure. In addition, discovery, authentication, association and security establishment of the link setup procedure may be called an association procedure.

An exemplary link setup procedure will now be described with reference to FIG. 5.

The STA may discover a network in step S510. Network discovery may include a scanning operation of the STA. That is, the STA needs to discover a network that can participate in communication in order to access the network. The STA needs to identify a compatible network prior to participating in a wireless network. A procedure of identifying a network present in a specific area is referred to as scanning.

Scanning includes active scanning and passive scanning.

FIG. 5 illustrates network discovery operation including active scanning. The STA performing active scanning transmits a probe request frame in order to search surrounding APs while changing channels and waits for a response to the probe request frame. A responder transmits a probe response frame in response to the probe request frame to the STA. Here, the responder may be an STA that has finally transmitted a beacon frame in a BSS of a channel being scanned. An AP corresponds to a responder in a BSS since the AP transmits a beacon frame, whereas a responder is not fixed in an IBSS since STAs in the IBSS transmit a beacon frame in rotation. For example, an STA, which has transmitted a probe request frame on channel #1 and has received a probe response frame on channel #1, may store BSS related information included in the received probe response frame, move to the next channel (e.g. channel #2) and perform scanning (i.e. probe request/response transmission and reception on channel #2) in the same manner.

The scanning operation may be performed in a passive manner, which is not shown in FIG. 5. An STA performing passive scanning waits for a beacon frame while changing channels. The beacon frame, one of management frames in IEEE 802.11, indicates presence of a wireless network and is periodically transmitted to the STA performing scanning to enable the STA to discover and participate in the wireless network. An AP periodically transmits the beacon frame in the BSS, whereas STAs in the IBSS transmit the beacon frame in rotation in the case of IBSS. Upon reception of the beacon frame, the STA performing scanning stores information about the BSS, included in the beacon frame, and records beacon frame information in each channel while moving to another channel. The STA that has received the beacon frame may store BSS related information included in the received beacon frame, move to the next channel and perform scanning on the next channel through the same method.

Comparing active scanning with passive scanning, active scanning has advantages of smaller delay and lower power consumption than passive scanning.

Upon discovery of the network, authentication may be performed on the STA in step S520. This authentication procedure may be referred to as first authentication to be discriminated from security setup operation of step S540, which will be described later.

Authentication includes a procedure through which the STA transmits an authentication request frame to the AP and a procedure through which the AP transmits an authentication response frame to the STA in response to the authentication request frame. An authentication frame used for authentication request/response corresponds to a management frame.

The authentication frame may include information about an authentication algorithm number, authentication transaction sequence number, status code, challenge text, RSN (Robust Security Network), finite cyclic group, etc. This information is part of information that may be included in the association request/response frame and may be replaced by other information or may further include additional information.

The STA may transmit the authentication request frame to the AP. The AP may determine to permit authentication of the STA on the basis of information included in the received authentication request frame. The AP may provide an authentication result to the STA through the authentication response frame.

Upon successful authentication of the STA, association may be performed in step S530. Association includes a procedure through which the STA transmits an association request frame to the AP and a procedure through which the AP transmits an association response frame to the STA in response to the association request frame.

For example, the association request frame may include information related to various capabilities, a beacon listen interval, a service set identifier (SSID), supported rates, supported channels, RSN, mobility domain, supported operating classes, TIM (Traffic Indication Map) broadcast request, interworking service capability, etc.

For example, the association response frame may include information related to various capabilities, a status code, AID (Association ID), supported rates, EDCA (Enhanced Distributed Channel Access) parameter set, RCPI (Received Channel Power Indicator), RSNI (Received Signal to Noise Indicator), mobility domain, timeout interval (association comeback time), overlapping BSS scan parameter, TIM broadcast response, QoS map, etc.

The aforementioned information is part of information that may be included in the association request/response frame and additional information may be further included in the association request/response frame.

Upon successful association of the STA with the network, security setup may be performed in step S540. Security setup in step S540 may be regarded as authentication through an RSNA (Robust Security Network Association) request/response. Authentication of step S520 may be referred to as first authentication and security setup of step S540 may be referred to as authentication.

Security setup of step S540 may include private key setup through 4-way handshaking using an EAPOL (Extensible Authentication Protocol over LAN) frame. In addition, security setup may be performed according to a security scheme that is not defined in IEEE 802.11.

### Evolution of WLAN

To overcome limited communication speed of a WLAN, IEEE 802.11n has been recently established as a technical standard. IEEE 802.11n has been developed to increase a network speed and reliability and extend a wireless network coverage. More specifically, IEEE 802.11n supports high throughput (HT) of higher than 540 Mbps and is based on MIMO using multiple antennas both for a transmitter and a receiver in order to minimize transmission error and optimize a transmission speed.

As supply of WLAN is activated and applications using WLAN are diversified, a new WLAN system for supporting higher throughput than the data throughput supported by IEEE 802.11n is required. A next-generation WLAN system supporting very high throughput (VHT) is a version (e.g. IEEE 802.11ac) following IEEE 802.11n and is one of IEEE 802.11 WLAN systems recently newly proposed in order to support data throughput of higher than 1 Gbps in a MAC service access point (SAP).

Next-generation WLAN systems support MU-MIMO (Multi-User Multiple Input Multiple Output) transmission in which a plurality of STAs simultaneously accesses channels in order to efficiently use radio channels. According to MU-MIMO, an AP can simultaneously transmit packets to one or more MIMO-paired STAs.

In addition, supporting WLAN system operations in a whitespace is under discussion. For example, introduction of a WLAN system in a TV whitespace (TV WS) such as a frequency band in an idle state (e.g. 54 to 698 MHz) according to digitalization of analog TV is discussed in IEEE 802.11af. However, this is exemplary and the whitespace can be regarded as a licensed band that can be preferentially used by a licensed user. The licensed user refers to a user permitted to use a licensed band and may be called a licensed device, a primary user, an incumbent user and the like.

For example, an AP and/or an STA operating in the WS need to provide protection for a licensed user. When a licensed user such as a microphone is using a specific WS channel corresponding to a frequency band having a specific bandwidth according to regulation, the AP and/or the STA cannot use the frequency band corresponding to the WS channel in order to protect the licensed user. In addition, when the licensed user uses a frequency band used to transmit and/or receive a current frame, the AP and/or the STA need to stop using the corresponding frequency band.

Accordingly, the AP and/or the STA need to preferentially perform a procedure of checking whether a specific frequency band in the WS can be used, in other words, whether there is a licensed user using the frequency band. To check whether a licensed user is present for a specific frequency band is called spectrum sensing. Energy detection, signature detection or the like are used as a spectrum sensing mechanism. When the strength of a received signal exceeds a predetermined value or a DTV preamble is detected, it can be determined that a licensed user is using a corresponding frequency band.

Furthermore, M2M (Machine-to-Machine) is discussed as a next-generation communication scheme. In IEEE 802.11 WLAN systems, IEEE 802.11ah is developed in order to support M2M. M2M refers to a communication scheme using one or more machines and may be called MTC (Machine Type Communication) or machine communication. Here, a machine refers to an entity that does not require direct manipulation or intervention of a person. For example, examples of the machine include a device such as a meter or a vending machine equipped with a radio communication module and a user equipment such as a smartphone capable of automatically accessing a network to perform communication without manipulation/intervention of a user. M2M may include communication between devices (device-to-device (D2D)) and communication between a device and an application server. Examples of communication between a device and an application server may include communication between a vending machine and a server, communication between a POS (Point of Sale) device and a server and communication between an electricity, gas or water meter and a server. In addition, M2M communication based applications may include security, transportation, healthcare and the like. Considering characteristics of these applications, M2M needs to support transmission and reception of a small amount of data at a low speed occasionally in an environment in which a large number of devices is present.

Specifically, M2M communication needs to support a large number of STAs. While it is assumed that a maximum of 2007 STAs is associated with one AP in a currently defined WLAN system, methods for supporting a case in which a larger number of (about 6000) STAs is associated with one AP are under discussion for M2M. Furthermore, it is expected that there are many applications supporting/requiring a low transmission rate in M2M communication. In a WLAN system, an STA can recognize presence of data to be transmitted thereto on the basis of a TIM (Traffic Indication Map) element. Methods for reducing a bitmap size of a TIM are discussed in order to support the aforementioned applications. In addition, it is expected that a large amount of traffic having a very long transmission/reception interval is present in M2M communication. For example, a very small amount of data such as electricity/gas/water consumption can be transmitted and received at a long interval (e.g. per month). Furthermore, since an operation of an STA is performed according to a command provided through downlink (i.e. link from an AP to a non-AP STA) and result data is reported through uplink (i.e. link from the non-AP STA to the AP) in M2M communication, M2M communication uses improved communication schemes on uplink through which principal data is transmitted. In addition, most M2M STAs operate using a battery and thus it is necessary to ensure a long use time by minimizing battery consumption. Furthermore, M2M STAs need to have a self-recovery function since it may be difficult for users to directly manipulate the M2M STAs in a specific situation. Accordingly, methods for efficiently supporting a case in which the number of STAs having data frames to receive an AP during one beacon period is very small even though the number of STAs associated with the AP is very large and reducing power consumption are under discussion in WLAN systems.

As described above, WLAN technology is rapidly evolving and thus technologies for direct link set-up, improving media streaming performance, supporting fast and/or large-scale initial session set-up, an extended bandwidth and operating frequency, etc. are being developed in addition to the aforementioned examples.

### Medium Access Mechanism

In the IEEE 802.11-based WLAN system, a basic access mechanism of MAC (Medium Access Control) is a Carrier Sense Multiple Access with Collision Avoidance (CSMA/CA) mechanism. The CSMA/CA mechanism is referred to as a Distributed Coordination Function (DCF) of IEEE 802.11 MAC, and basically includes a "Listen Before Talk" access mechanism. In accordance with the above-mentioned access mechanism, the AP and/or STA may perform Clear Channel Assessment (CCA) for sensing an RF channel or medium during a predetermined time interval [for example, DCF InterFrame Space (DIFS)], prior to data transmission. If it is determined that the medium is in the idle state, frame transmission through the corresponding medium begins. On the other hand, if it is determined that the medium is in the occupied state, the corresponding AP and/or STA does not start its own transmission, establishes a delay time (for example, a random backoff period) for medium access, and attempts to start frame transmission after waiting for a predetermined time. Through application of a random backoff period, it is expected that multiple STAs will attempt to start frame transmission after waiting for different times, resulting in minimum collision.

In addition, IEEE 802.11 MAC protocol provides a Hybrid Coordination Function (HCF). HCF is based on DCF and Point Coordination Function (PCF). PCF refers to the polling-based synchronous access scheme in which periodic polling is executed in a manner that all reception (Rx) APs and/or STAs can receive the data frame. In addition, HCF includes Enhanced Distributed Channel Access (EDCA) and HCF Controlled Channel Access (HCCA). EDCA is achieved when the access scheme provided from a provider to a plurality of users is contention-based. HCCA is achieved by the contention-free-based channel access scheme based on the polling mechanism. In addition, HCF includes a medium access mechanism for improving Quality of Service (QoS) of WLAN, and may transmit QoS data in both a Contention Period (CP) and a Contention Free Period (CFP).

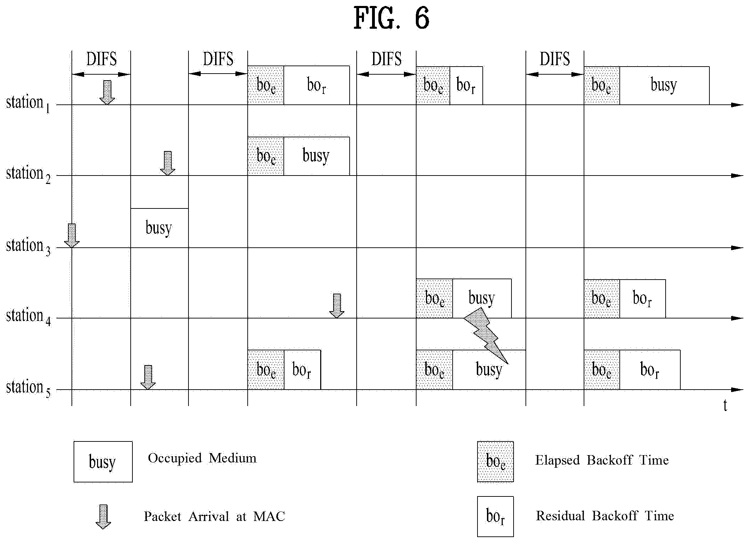

FIG. 6 is a conceptual diagram illustrating a backoff process.

Operations based on a random backoff period will hereinafter be described with reference to FIG. 6. If the occupy- or busy- state medium is shifted to an idle state, several STAs may attempt to transmit data (or frames). As a method for implementing a minimum number of collisions, each STA selects a random backoff count, waits for a slot time corresponding to the selected backoff count, and then attempts to start data transmission. The random backoff count is a pseudo-random integer, and may be set to one of 0 to CW values. In this case, CW refers to a Contention Window parameter value. Although an initial value of the CW parameter is denoted by CWmin, the initial value may be doubled in case of transmission failure (for example, in the case in which ACK of the transmission frame is not received). If the CW parameter value is denoted by CWmax, CWmax is maintained until data transmission is successful, and at the same time it is possible to attempt to start data transmission. If data transmission is successful, the CW parameter value is reset to CWmin. Preferably, CW, CWmin, and CWmax are set to 2n-1 (where n=0, 1,2,...).

If the random backoff process starts operation, the STA continuously monitors the medium while counting down the backoff slot in response to the decided backoff count value. If the medium is monitored as the occupied state, the countdown stops and waits for a predetermined time. If the medium is in the idle state, the remaining countdown restarts.

As shown in the example of FIG. 6, if a packet to be transmitted to MAC of STA3 arrives at STA3, STA3 determines whether the medium is in the idle state during the DIFS, and may directly start frame transmission. In the meantime, the remaining STAs monitor whether the medium is in the busy state, and wait for a predetermined time. During the predetermined time, data to be transmitted may occur in each of STA1, STA2, and STA5. If the medium is in the idle state, each STA waits for the DIFS time and then performs countdown of the backoff slot in response to a random backoff count value selected by each STA. The example of FIG. 6 shows that STA2 selects the lowest backoff count value and STA1 selects the highest backoff count value. That is, after STA2 finishes backoff counting, the residual backoff time of STA5 at a frame transmission start time is shorter than the residual backoff time of STA1. Each of STA1 and STA5 temporarily stops countdown while STA2 occupies the medium, and waits for a predetermined time. If occupation of the STA2 is finished and the medium re-enters the idle state, each of STA1 and STA5 waits for a predetermined time DIFS, and restarts backoff counting. That is, after the remaining backoff slot as long as the residual backoff time is counted down, frame transmission may start operation. Since the residual backoff time of STA5 is shorter than that of STA1, STA5 starts frame transmission. Meanwhile, data to be transmitted may occur in STA4 while STA2 occupies the medium. In this case, if the medium is in the idle state, STA4 waits for the DIFS time, performs countdown in response to the random backoff count value selected by the STA4, and then starts frame transmission. FIG. 6 exemplarily shows the case in which the residual backoff time of STA5 is identical to the random backoff count value of STA4 by chance. In this case, unexpected collision may occur between STA4 and STA5. If collision occurs between STA4 and STA5, neither STA4 nor STA5 receives ACK, resulting in the occurrence of a failure in data transmission. In this case, each of STA4 and STA5 increases the CW value two times, and STA4 or STA5 may select a random backoff count value and then perform countdown. Meanwhile, STA1 waits for a predetermined time while the medium is in the occupied state due to transmission of STA4 and STA5. In this case, if the medium is in the idle state, STA1 waits for the DIFS time, and then starts frame transmission after lapse of the residual backoff time.

### STA sensing operation

As described above, the CSMA/CA mechanism includes not only a physical carrier sensing mechanism in which the AP and/or STA can directly sense the medium, but also a virtual carrier sensing mechanism. The virtual carrier sensing mechanism can solve some problems (such as a hidden node problem) encountered in medium access. For the virtual carrier sensing, MAC of the WLAN system can utilize a Network Allocation Vector (NAV). In more detail, by means of the NAV value, the AP and/or STA, each of which currently uses the medium or has authority to use the medium, may inform another AP and/or another STA of the remaining time in which the medium is available. Accordingly, the NAV value may correspond to a reserved time in which the medium will be used by the AP and/or STA configured to transmit the corresponding frame. An STA having received the NAV value may prohibit medium access (or channel access) during the corresponding reserved time. For example, NAV may be set according to the value of a "duration" field of the MAC header of the frame.

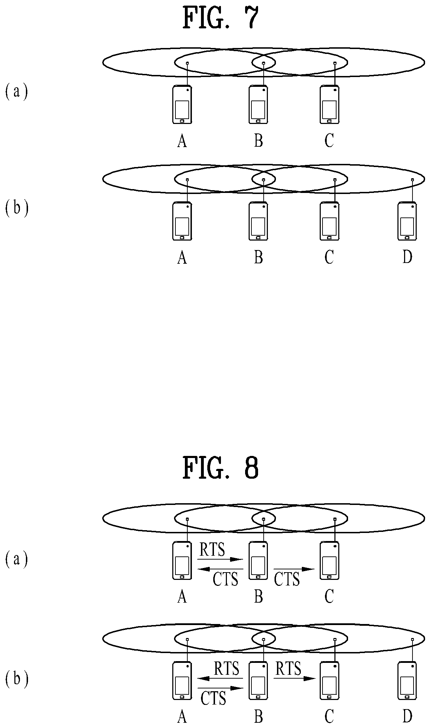

The robust collision detection mechanism has been proposed to reduce the probability of such collision, and as such a detailed description thereof will hereinafter be described with reference to FIGS. 7 and 8. Although an actual carrier sensing range is different from a transmission range, it is assumed that the actual carrier sensing range is identical to the transmission range for convenience of description and better understanding of the present invention.

FIG. 7 is a conceptual diagram illustrating a hidden node and an exposed node.

FIG. 7(a) exemplarily shows the hidden node. In FIG. 7(a), STA A communicates with STA B, and STA C has information to be transmitted. In FIG. 7(a), STA C may determine that the medium is in the idle state when performing carrier sensing before transmitting data to STA B, under the condition that STA A transmits information to STA B. Since transmission of STA A (i.e., occupied medium) may not be detected at the location of STA C, it is determined that the medium is in the idle state. In this case, STA B simultaneously receives information of STA A and information of STA C, resulting in the occurrence of collision. Here, STA A may be considered as a hidden node of STA C.

FIG. 7(b) exemplarily shows an exposed node. In FIG. 7(b), under the condition that STA B transmits data to STA A, STA C has information to be transmitted to STA D. If STA C performs carrier sensing, it is determined that the medium is occupied due to transmission of STA B. Therefore, although STA C has information to be transmitted to STA D, the medium-occupied state is sensed, such that STA C must wait for a predetermined time (i.e., standby mode) until the medium is in the idle state. However, since STA A is actually located out of the transmission range of STA C, transmission from STA C may not collide with transmission from STA B from the viewpoint of STA A, such that STA C unnecessarily enters the standby mode until STA B stops transmission. Here, STA C is referred to as an exposed node of STA B.

FIG. 8 is a conceptual diagram illustrating RTS (Request To Send) and CTS (Clear To Send).

In order to efficiently utilize the collision avoidance mechanism under the above-mentioned situation of FIG. 7, it is possible to use a short signaling packet such as RTS (request to send) and CTS (clear to send). RTS/CTS between two STAs may be overheared by peripheral STA(s), such that the peripheral STA(s) may consider whether information is communicated between the two STAs. For example, if STA to be used for data transmission transmits the RTS frame to the STA having received data, the STA having received data transmits the CTS frame to peripheral STAs, and may inform the peripheral STAs that the STA is going to receive data.

FIG. 8(a) exemplarily shows the method for solving problems of the hidden node. In FIG. 8(a), it is assumed that each of STA A and STA C is ready to transmit data to STA B. If STA A transmits RTS to STA B, STA B transmits CTS to each of STA A and STA C located in the vicinity of the STA B. As a result, STA C must wait for a predetermined time until STA A and STA B stop data transmission, such that collision is prevented from occurring.

FIG. 8(b) exemplarily shows the method for solving problems of the exposed node. STA C performs overhearing of RTS/CTS transmission between STA A and STA B, such that STA C may determine no collision although it transmits data to another STA (for example, STA D). That is, STA B transmits an RTS to all peripheral STAs, and only STA A having data to be actually transmitted can transmit a CTS. STA C receives only the RTS and does not receive the CTS of STA A, such that it can be recognized that STA A is located outside of the carrier sensing range of STA C.

### Multi-band scanning mechanism

A standard for WLAN technology has been developed as the IEEE 802.11 standard. IEEE 802.11a and 802.11b use an unlicensed band at 2.4 GHz or 5 GHz. IEEE 802.11b provides a transmission rate of 11 Mbps and IEEE 802.11a provides a transmission rate of 54 Mbps. IEEE 802.11g provides a transmission rate of 54 Mbps by applying orthogonal frequency division multiplexing (OFDM) at 2.4 GHz. IEEE 802.11n provides a transmission rate of 300 Mbps for four spatial streams by applying multiple input multiple output (MIMO)-OFDM. IEEE 802.11n supports a channel bandwidth up to 40 MHz and, in this case, provides a transmission rate of 600 Mbps.

The IEEE 802.11af standard has been developed to establish operation of an unlicensed device in a TV whitespace (TVWS) band in addition to an existing band of 2.4 GHz or 5 GHz. TVWS is a frequency band allocated to broadcast TV, including an ultra high frequency (UHF) band and a very high frequency (VHF) band. TVWS refers to a frequency band in which an unlicensed device is permitted to be used under the condition that use of the unlicensed device does not hinder communication of a licensed device operating in the corresponding frequency band. The licensed device may include a TV, a wireless microphone, etc. The licensed device may be called an incumbent user or a primary user. To solve a coexistence problem between unlicensed devices that use TVWS, a signaling protocol such as a common beacon frame, a frequency sensing mechanism, and the like may be needed.

Operation of all unlicensed devices is permitted in frequency bands of 512 to 608 MHz and 614 to 698 MHz except for a few special cases. However, communication only between fixed devices is permitted in frequency bands of 54 to 60 MHz, 76 to 88 MHz, 174 to 216 MHz, and 470 to 512 MHz. The fixed devices refer to devices which transmit signals only at a given location. An IEEE 802.11 TVWS device refers to an unlicensed device operating using an IEEE 802.11 media access control (MAC) layer and a physical layer (PHY) in a TVWS spectrum.

An unlicensed device which desires to use TVWS should provide a protection function for a licensed device. Accordingly, the unlicensed device must confirm whether the licensed device occupies a corresponding band before starting signal transmission in TVWS. To this end, the unlicensed device may confirm whether a corresponding band is being used by the licensed device by performing spectrum sensing. A spectrum sensing mechanism includes an energy detection scheme and a feature detection scheme. If the strength of a signal received on a specific channel is above a prescribed value or if a DTV preamble is detected, the unlicensed device may determine that the licensed device is using the specific channel. If it is determined that the licensed device is being used on a channel immediately adjacent to a channel that the unlicensed device currently uses, the unlicensed device should lower transmission power thereof.

In the spectrum sensing mechanism, a sensing duration is 10ms or more, which is relatively long, results in relatively high power consumption of an STA. Especially, the sensing duration is proportional to the possibility of detecting a signal of the licensed device and thus the possibility of detecting the signal of the licensed device increases when the sensing duration is extended.

An STA capable of supporting multiple bands (e.g. 2.4 GHz, 5 GHz, and a TVWS band) may be referred to as a multi-band STA. According to a conventionally defined scanning operation, an STA needs to move (or switch) to a specific band and then perform the scanning operation (e.g. beacon frame listening or probe request/response frame transmission and reception) in order to discover an AP which is operating in the specific band. According to the conventional scanning operation, in order for a multi-band STA which is operating in a first band to discover an AP which is operating in a second band, the multi-band STA should move (or switch) to the second band and perform scanning. While the multi-band STA performs the scanning operation, a scanning delay may occur due to the time consumed when the multi-band STA moves (or switches) to another band.

To solve this problem, the present invention proposes a multi-band scanning mechanism. The multi-band scanning mechanism refers to a mechanism in which an STA supporting multiple bands discovers, using a currently used band (or currently operating band), an AP which is operating in another band (corresponding to a band in which operation of the STA is supported but the STA is not being used or is not operating). That is, the present invention proposes a method for enabling a multi-band STA to discover an AP which is operating in a second band even without moving to the second band from a first band (or without switching between operating bands). Although the multi-band scanning mechanism of the present invention will be described based on an IEEE 802.11 WLAN system, the scope of the present invention is not limited thereto.

For example, it is assumed that there are an STA and an AP supporting both the IEEE 802.11a/b/g standard (802.11 MAC/PHY standard operating in a band of 2.4 GHz or 5 GHz) and the IEEE 802.11af standard (802.11 MAC/PHY standard operating in TVWS) and that the STA discovers the AP and associates with the AP according to the scanning mechanism in a band of 2.4 GHz (or an industrial, scientific and medical (ISM) radio band).

In order to obtain TVWS BSS information of the AP, the STA may transmit a probe request frame in an ISM band of 2.4 GHz in which the STA is currently connected to the AP and receive a probe response frame from the AP (here, the TVWS BSS information represents information of a BSS of the AP operating in TVWS and may include, for example, information such as a timestamp, a beacon interval, capability, an SSID, supported rates, a channel number, and power constraint). The probe request frame transmitted by the STA to the AP includes operating class information that the STA desires to discover (in this case, an operating class corresponds to a set of rules (e.g. a channel starting frequency, a channel spacing, a channel set, and a behavior limit set) applied to a wireless device). Upon receiving the probe request frame including the operating class information, the AP may transmit the probe response frame including the TVWS BSS information thereof operating in an operating class to be requested to be discovered by the STA. If the operating class requested by the STA is not supported by the AP, the AP does not transmit the probe response frame to the STA.

A conventional active scanning mechanism is a scheme in which the STA discovers the AP operating on a channel that the STA is scanning (i.e. the STA is operating) by transmitting the probe request frame on the corresponding channel. More specifically, upon receiving the probe request frame from the STA, the AP transmits the BSS information thereof operating on a channel on which the probe request frame is received to the STA through the probe response frame.

According to the multi-band scanning mechanism proposed in the present invention, in order to discover an AP operating on a channel (e.g. a second channel) other than a channel (e.g. a first channel) on which the STA is operating, if the STA transmits the probe request frame including information about the second channel that the STA desires to discover to the AP on the first channel, the AP which has received the probe request frame transmits BSS information of the AP operating on the second channel to the STA through the probe response frame.

In addition, the STA may request scanning (or discovery for a BSS operating on another channel/operating class) for a channel (an operating class supported by the STA or an operating class which is supported by the STA but includes a channel other than a currently used channel) other than a currently used channel (i.e. a channel on which the probe request frame is transmitted). The STA requests discovery/scanning for one or more channels/operating classes. That is, the STA may simultaneously request scanning for a currently used channel and other channels/operating classes.

The BSS information (i.e. BSS information about an operating class on which the STA requests scanning) provided through the probe response frame may include a timestamp, a beacon interval, capability, an SSID, supported rates, a frequency hopping (FH) parameter set, a direct sequence (DS) parameter set, a contention free (CF) parameter set, and an IBSS parameter set. According to the multi-band scanning method of the present invention, the AP which has received the probe request frame for requesting scanning for one or more channels/operating classes may transmit the probe response frame including the BSS information about each of the one or more channels/operating classes to the STA in response to the probe request frame.

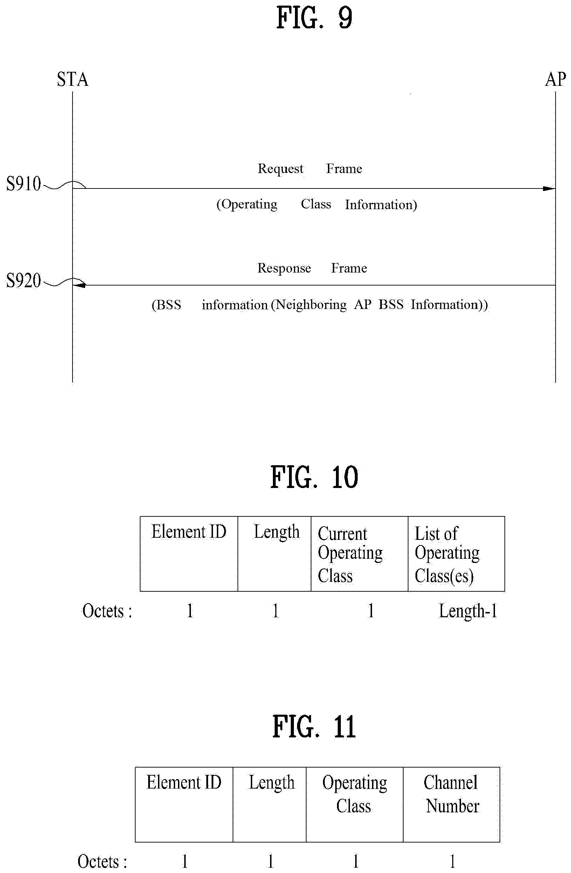

FIG. 9 is a diagram illustrating a multi-band scanning method according to the present invention.

An STA may transmit a request frame to an AP in step S910. A destination address of the request frame may be set to a MAC address of a specific AP accessed by the STA. Alternatively, the destination address of the request frame may be set to a broadcast address. For example, the request frame transmitted in step S910 may be a probe request frame.

The request frame includes an operating class information element. The operating class information element may represent an operating class that the STA which has transmitted the request frame desires to discover (or scan). The STA transmits the request frame including information about an operating class desired to be discovered in order to confirm whether an AP supporting the corresponding operating class (or an AP operating in the corresponding operating class) is present. The STA confirms whether an AP operating in the corresponding operating class is present in order to connect to the AP or associate with the AP when the AP operating in the corresponding operating class is present. This operation is based on the premise that the STA is capable of operating in the corresponding operating class. Therefore, the operating class information element that the STA desires to discover may correspond to an operating class supported by the STA.

In step S920, the AP may transmit a response frame to the STA in response to the request frame received in step S910 from the STA. For example, the response frame of step S920 may be a probe response frame.

The response frame includes BSS information of the AP operating in an operating class discovered by the STA (or an operating class supported by the STA). If the AP does not operate in the operating class for which the STA requests discovery, the AP may not transmit the response frame to the STA.

In addition, the operating class information element included in the request frame (step S910) may include information about one or more operating classes. The information about a plurality of operating classes is included in the request frame in order to support scanning for the plurality of operating classes. For example, when an STA operating in a band of 2.4 GHz (e.g. operating according to the IEEE 802.11b/g standard) transmits the request frame, it may be assumed that operating class information elements are included in the request frame and that the operating class information elements are set to values indicating a specific operating class of a band of 5 GHz and a specific operating class of a TVWS band (e.g. a band of 512 to 698 MHz). Upon receiving the request frame, the AP may transmit the response frame (step S920) including information about a BSS supporting the specific operating class of the band of 5 GHz and the specific operating class of the TVWS band to the STA as a response. Then, the STA may obtain the BSS information in the band of 5 GHz and the TVWS band although the STA is operating in the band of 2.4 GHz (or although the STA transmits the request frame in the band of 2.4 GHz).

According to the present invention, upon receiving the request frame (step S910) from the STA, the AP may transmit the response frame (step S920) including BSS information of a neighboring AP to the STA when the neighboring AP operates in an operating class for which the STA requests discovery (or an operating class supported by STA). That is, the response frame transmitted by the AP may include one or more neighboring AP information fields.

Table 1 shows a probe request frame format for a multi-band scanning scheme.

**[Table 1]**

| Order | Information |
|---|---|
| 1 | SSID |
| 2 | Supported rates |
| 3 | Request information |
| 4 | Extended Supported Rates |
| 5 | Supported Operating Classes |
| Last | Vendor Specific |

Table 1 illustrates examples of information included in a probe request frame. The scope of the present invention is not limited to Table 1 and the probe request frame may include part of exemplary fields of Table 1 or may further include fields not shown in Table 1.

To support multi-band scanning, the probe request frame may include at least a Supported Operating Classes field among fields shown in Table 1.

Information about the supported operating classes included in the probe request frame proposed in the present invention includes information corresponding to an operating class for which the STA described in the above example of the present invention requests discovery.

FIG. 10 is a diagram illustrating an exemplary format of a supported operating class information element.

An Element ID field may be set to a value indicating that an associated element corresponds to an operating class information element and may be defined by a length of one octet.

A Length field may be set to a value representing the length of fields (this value may be expressed by a length parameter) after the Length field and may be defined by a length of one octet.

A Current Operating Class field may be set to a value representing an operating class which is operating or is being used and may be defined by a length of one octet.

A List of Operating Class(es) field may be set to a value representing operating class(es) for which the STA requests discovery. That is, the List of Operating Class(es) field may be set to a value representing operating class(es) except for currently operating class(es) supported by the STA. The List of Operating Class(es) field may be defined by an octet length corresponding to a value obtained by subtracting one from a value (i.e. length) indicated by the Length field.

When the probe request frame including the Supported Operating Classes field of the STA is received, if a BSS (including a BSS of neighboring AP(s)) supporting an operating class identical to the supported operating classes of the STA is present, the AP may provide BSS information of the corresponding BSS to the STA through the probe response frame.

The probe response frame may include BSS information of a BSS operating in an operating class other than a current operating class of the STA. In this case, the probe response frame may include information about a channel number on which a BSS supporting the operating class other than the current operating class of the STA operates. To this end, the probe response frame may include a multi-band channel information element.

FIG. 11 is a diagram illustrating an exemplary format of a multi-band channel information element.

An Element ID field may be set to a value indicating that an associated element corresponds to a multi-band channel information element and may be defined by a length of one octet.

A Length field may be set to a value representing the length of fields after the Length field and may be defined by a length of one octet.

An Operating Class field and a Channel Number field of the multi-band channel information element indicate an operating class and a channel number in and on which a specific BSS operates and the length of each field may be defined as one octet. In this case, BSS information of the specific BSS may be provided through the probe response frame.

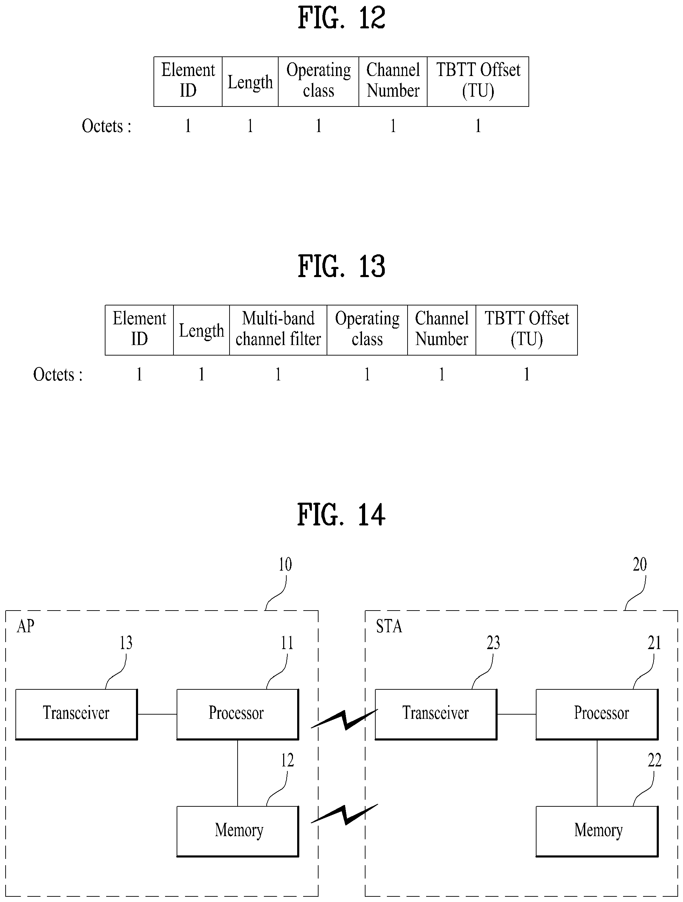

FIG. 12 is a diagram illustrating another exemplary format of the multi-band channel information element. As compared with the multi-band channel information element of FIG. 11, the multi-band channel information element of FIG. 12 further includes a target beacon transmission time (TBTT) Offset field.

A TBTT is a value indicating a time when a BSS (or AP) should transmit a beacon and is expressed in a time unit (TU) (A TU may be defined in microseconds (µs), for example, 1024 µs).

The TBTT Offset field is set to a value indicating an offset for determining the TBTT of a BSS operating on a specific channel indicated by an Operating Class field and a Channel Number field of the multi-band channel information element.

For example, the STA operating in a band of 2.4 GHz may indicate that the STA supports an operating class in a band of 5 GHz or a TVWS band using the Supported Operating Classes field while transmitting the probe request frame to a first AP (e.g. an AP operating in a band of 2.4 GHz). Then, the first AP may provide BSS information of a BSS (including a BSS of neighboring AP(s)) operating in the band of 5 GHz or the TVWS band to the STA through the probe response frame. The probe response frame may include the multi-band channel information element as shown in FIG. 12. Through the probe response frame, the STA can be aware that the BSS of BSS information operates in the band of 5 GHz or the TVWS band. To protect a primary user in the band of 5 GHz or the TVWS band, active scanning (i.e. transmission of the probe request frame) of an unassociated STA may not be permitted. Then, the STA cannot perform active scanning on a channel indicated by the multi-band channel information element and should perform passive scanning (i.e. listening for a beacon frame). If the STA is not aware of a timing at which a beacon is transmitted from a second AP (e.g. an AP of a BSS operating in the band of 5 GHz or the TVWS band), the STA should attempt to continue to receive the beacon until the beacon is received from the second AP. However, if the STA can be aware of the timing at which the beacon is transmitted from the second AP using the TBTT Offset field described above, unnecessary power consumption can be reduced.

To this end, the TBTT Offset field may be set to a value indicating a time difference between an immediately previous beacon transmission timing (i.e. an immediately previous TBTT) of an AP (e.g. the first AP) which transmits the probe response frame including the TBTT Offset field and a next TBTT of an AP (e.g. the second AP) of a BSS about which BSS information is transmitted through the probe response frame. The TBTT offset may be expressed in TUs.

If an SSID field included in the probe request frame proposed in the present invention indicates a specific SSID, BSS information of only a BSS (or a multi-band channel information element of a BSS) corresponding to the corresponding SSID may be provided through the probe response frame. It can be said that the BSS information included in the probe response frame is limited only to information about a BSS filtered by the SSID of the probe request frame.

If the probe request frame transmitted by the STA includes both the SSID field and the Supported Operating Classes field, BSS information of a BSS (including a BSS of neighboring AP(s)) (or a multi-band channel information element of a BSS) which corresponds to an SSID of the SSID field and simultaneously supports an operating class identical to a supported operating class of the STA may be transmitted to the STA through the probe response frame as a response.

The probe request frame transmitted by the STA may include access network type information. The access network type information may be set to a value indicating the type of a network that the STA desires to discover. The access network type indicates the network type of a BSS and may be divided into types such as Internet accessibility/inaccessibility, a private network, a private network with guest access, a chargeable public network, a free public network, a personal device network, an emergency services only network, a test or experiment, etc. Then, BSS information of only a BSS corresponding to a value indicated by the access network type information included in the probe request frame (or a multi-band channel information element of the BSS) may be provided through the probe response frame. It can be said that the BSS information included in the probe response frame is limited only to information about a BSS filtered by an SSID of the probe request frame.

A homogenous extended service set identifier (HESSID) included in the probe request frame transmitted by the STA may be set to a value indicating a mobility domain of a BSS. In this case, BSS information of only a BSS corresponding to a value indicated by the HESSID of the probe request frame (or a multi-band channel information element of the corresponding BSS) may be provided through the probe response frame.

If the AP is not aware of an SSID of a specific BSS or an access network type, information of a BSS which is not filtered by a specific SSID or a specific access network type indicated by the probe request frame may be included in the multi-band channel information element. Thus, information indicating whether filtering is applied may be included in the probe response frame (or the multi-band channel information element of the probe response frame).

FIG. 13 is a diagram illustrating another exemplary multi-band channel information element. As compared with the multi-band channel information element of FIG. 12, the multi-band channel information element of FIG. 13 further includes a multi-band channel filter field.

For example, if a value of a multi-band channel filter bit is set to 0, this represents that BSS information included in a multi-band channel information element is about a BSS which does not correspond to an SSID or an access network type specified in the probe request frame. If the value of the multi-band channel filter bit is set to 1, this represents that the BSS information included in the multi-band channel information element is about a BSS which corresponds to the SSID or the access network type specified in the probe request frame.

According to the request frame, response frame, and the information element (or field) for the request frame and the response frame, proposed in the present invention, an STA capable of supporting multiple bands can discover a BSS or an AP operating in a channel or band other than a channel or band in which the STA is operating (or the STA is being accessed), without channel mobility (or channel switching). To this end, the STA may transmit a request frame including operating class information of a channel or band that the STA desires to discover (or the STA supports) to AP(s). The request frame may further include information (e.g. an SSID, an access network type, an HESSID, etc.) specifying a network that the STA desires to discover. Upon receiving the request frame, the AP(s) may transmit a response frame including an operating class and a channel number of a BSS operating in an operating class supported by the STA to the STA. The response frame may further include BSS information (e.g. neighboring AP information) in addition to the operating class and channel number information of the BSS. The BSS information may include information indicating a TBTT offset of the corresponding BSS and information indicating whether filtering is applied.

The request frame, response frame, and the information element (or field) for the request frame and the response frame, proposed in the present invention are not limited by their names. For example, the multi-band channel information element described with reference to FIGs. 11 to 13 may be included in the probe response frame transmitted by the AP (e.g. the first AP) that has received the probe request frame and may include information of other APs (e.g. the second AP(s)) other than the first AP. Therefore, the multi-band channel information element may be referred to as a neighboring AP information field.

The various embodiments of the present invention described above may be implemented independently or two or more thereof may be implemented in combination.

FIG. 14 is a block diagram illustrating a radio device according to an embodiment of the present invention.

An AP 10 may include a processor 11, a memory 12, and a transceiver 13. An STA 20 may include a processor 21, a memory 22, and a transceiver 23. The transceivers 13 and 23 may transmit/receive radio signals and may implement a physical layer based on an IEEE 802 system. The processors 11 and 21 are connected to the transceivers 13 and 21, respectively, and may implement a physical layer and/or a MAC layer based on the IEEE 802 system. The processors 11 and 21 may be configured to perform operations according to the various embodiments of the present invention described above. Modules for implementing operations of the AP and STA according to the various embodiments of the present invention described above may be stored in the memories 12 and 22 and carried out by the processors 11 and 21. The memories 12 and 22 may be included in the processors 11 and 21 or may be installed at the exterior of the processors 11 and 21 to be connected by a known means to the processors 11 and 21.

The detailed configuration of the AP and STA may be implemented such that various embodiments of the present invention described above are independently applied or two or more thereof are implemented in combination. A repeated description is omitted for clarity.

The above-described embodiments may be implemented by various means, for example, by hardware, firmware, software, or a combination thereof.

In a hardware configuration, the method according to the embodiments of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, or microprocessors.

In a firmware or software configuration, the method according to the embodiments of the present invention may be implemented in the form of modules, procedures, functions, etc. performing the above-described functions or operations. Software code may be stored in a memory unit and executed by a processor. The memory unit may be located at the interior or exterior of the processor and may transmit and receive data to and from the processor via various known means.

The detailed description of the preferred embodiments of the present invention has been given to enable those skilled in the art to implement and practice the invention. Although the invention has been described with reference to the preferred embodiments, those skilled in the art will appreciate that various modifications and variations can be made in the present invention without departing from the scope of the invention described in the appended claims. Accordingly, the invention should not be limited to the specific embodiments described herein, but should be accorded the broadest scope consistent with the principles and novel features disclosed herein.

### Industrial Applicability

Although the above various embodiments of the present invention have been described based on an IEEE 802.11 system, the embodiments are applicable in the same manner to various mobile communication systems.

## Claims

1. A method for performing scanning over multiple bands by a station (20), STA, in a wireless LAN communication system, the method comprising:
transmitting a first frame to a first access point (10), AP; and
receiving a second frame from the first AP in response to the first frame,
wherein the second frame includes information about neighbor APs when the first frame includes information about one or more operating classes supported by the STA and a service set identifier, SSID, and
wherein a SSID of the neighbor APs is matched with the SSID included in the first frame and an operating class of the neighbor APs is matched with an operating class included in the one or more operating classes supported by the STA.

2. The method according to claim 1, wherein a multi-band channel filter field included in the second frame sets as a first value when the SSID of the neighbor APs is matched with the SSID included in the first frame.

3. The method according to claim 1, wherein the second frame includes one or more operating classes field and a channel number field of the neighbor APs.

4. The method according to claim 1, wherein the second frame further includes target beacon transmission time, TBTT, offset information.

5. The method according to claim 4, wherein the TBTT offset has a value indicating a time difference between an immediately previous TBTT of the first AP and a next TBTT of the second AP.

6. The method according to claim 1, further comprising passive scanning for discovery of the neighbor APs using information obtained through the second frame.

7. The method according to claim 1, wherein the first frame further includes access network type information and the second frame includes information about the neighbor APs having an access network type corresponding to the access network type information included in the first frame.

8. The method according to claim 1, wherein the second frame includes information about one or more neighbor APs.

9. The method according to claim 1, wherein the first frame and the second frame are transmitted and received in a first band and the neighbor APs are APs operating in a second band.

10. The method according to claim 1, wherein the first frame is a probe request frame and the second frame is a probe response frame.

11. A method for supporting scanning over multiple bands of a station (10), STA, by an access point (20), AP, in a wireless LAN communication system, the method comprising:
receiving a first frame from the STA; and
transmitting a second frame to the STA in response to the first frame,
wherein the second frame includes information about neighbor APs when the first frame includes information about one or more operating classes supported by the STA and a service set identifier, SSID, and
wherein a SSID of the neighbor APs is matched with the SSID included in the first frame and an operating class of the neighbor APs is matched with an operating class included in the one or more operating classes supported by the STA.

12. A station (20), STA, for performing scanning over multiple bands in a wireless LAN communication system, the STA comprising:
a transceiver (23); and
a processor (21),
wherein the processor is configured to:
control the transceiver to transmit a first frame to a first access point, AP, and receive a second frame from the first AP in response to the first frame,
wherein the second frame includes information about neighbor APs when the first frame includes information about one or more operating classes supported by the STA and a service set identifier, SSID, and
wherein a SSID of the neighbor APs is matched with the SSID included in the first frame and an operating class of the neighbor APs is matched with an operating class included in the one or more operating classes supported by the STA.

13. An access point (10), AP, for supporting scanning over multiple bands in a wireless LAN communication system, the AP comprising:
a transceiver (13); and
a processor (11),
wherein the processor is configured to:
control the transceiver to receive a first frame from the STA and transmit a second frame to the STA in response to the first frame,
wherein the second frame includes information about neighbor APs when the first frame includes information about one or more operating classes supported by the STA and a service set identifier, SSID, and
wherein a SSID of the neighbor APs is matched with the SSID included in the first frame and an operating class of the neighbor APs is matched with an operating class included in the one or more operating classes supported by the STA.

## Patentansprüche

1. Verfahren zur Durchführung eines Abtastens über mehrere Bänder durch eine Station (20), STA, in einem drahtlosen LAN-Kommunikationssystem, wobei das Verfahren aufweist:
Übertragen eines ersten Rahmens an einen ersten Zugangspunkt (10), AP; und
ansprechend auf den ersten Rahmen Empfangen eines zweiten Rahmens von dem ersten AP,
wobei der zweite Rahmen Informationen über Nachbar-APs enthält, wenn der erste Rahmen Informationen über eine oder mehrere Betriebsklassen, die von der STA unterstützt werden, und eine Dienstsatzkennung SSID enthält, und
wobei eine SSID der Nachbar-APs mit der in dem ersten Rahmen enthaltenen SSID abgeglichen wird und eine Betriebsklasse der Nachbar-APs mit einer Betriebsklasse abgeglichen wird, die in der einen oder den mehreren von der STA unterstützten Betriebsklassen enthalten ist.

2. Verfahren nach Anspruch 1, wobei ein in dem zweiten Rahmen enthaltenes Mehrband-Kanalfilterfeld einen ersten Wert festlegt, wenn die SSID der Nachbar-APs mit der in dem ersten Rahmen enthaltenen SSID abgeglichen wird.

3. Verfahren nach Anspruch 1, wobei der zweite Rahmen ein oder mehrere Betriebsklassenfelder und ein Kanalnummernfeld der Nachbar-APs enthält.

4. Verfahren nach Anspruch 1, wobei der zweite Rahmen ferner eine Ziel-Beacon-Übertragungszeit-, TBTT-, Versatzinformation enthält.

5. Verfahren nach Anspruch 4, wobei der TBTT-Versatz einen Wert hat, der eine Zeitdifferenz zwischen einer unmittelbar vorhergehenden TBTT des ersten AP und einer nächsten TBTT des zweiten AP anzeigt.

6. Verfahren nach Anspruch 1, das ferner passives Abtasten zum Auffinden der Nachbar-APs unter Verwendung von Informationen, die durch den zweiten Rahmen erhalten werden, aufweist.

7. Verfahren nach Anspruch 1, wobei der erste Rahmen ferner Zugangsnetzwerktypinformationen enthält und der zweite Rahmen Informationen über die Nachbar-APs mit einem Zugangsnetzwerktyp, der den in dem ersten Rahmen enthaltenen Zugangsnetzwerktypinformationen entspricht, enthält.

8. Verfahren nach Anspruch 1, wobei der zweite Rahmen Informationen über einen oder mehrere Nachbar-APs enthält.

9. Verfahren nach Anspruch 1, wobei der erste Rahmen und der zweite Rahmen in einem ersten Band übertragen werden und die Nachbar-APs APs sind, die in einem zweiten Band arbeiten.

10. Verfahren nach Anspruch 1, wobei der erste Rahmen ein Prüfanforderungsrahmen ist und der zweite Rahmen ein Prüfantwortrahmen ist.

11. Verfahren zur Unterstützung des Abtastens über mehrere Bänder einer Station (10), STA, durch einen Zugangspunkt (20), AP, in einem drahtlosen LAN-Kommunikationssystem, wobei das Verfahren aufweist:
Empfangen eines ersten Rahmens von der STA; und
ansprechend auf den ersten Rahmen Übertragen eines zweiten Rahmens an die STA,
wobei der zweite Rahmen Informationen über Nachbar-APs enthält, wenn der erste Rahmen Informationen über eine oder mehrere Betriebsklassen, die von der STA unterstützt werden, und eine Dienstsatzkennung SSID enthält, und
wobei eine SSID der Nachbar-APs mit der in dem ersten Rahmen enthaltenen SSID abgeglichen wird und eine Betriebsklasse der Nachbar-APs mit einer Betriebsklasse abgeglichen wird, die in der einen oder den mehreren von der STA unterstützten Betriebsklassen enthalten ist.

12. Station (20), STA, zur Durchführung des Abtastens über mehrere Bänder in einem drahtlosen LAN-Kommunikationssystem, wobei die STA aufweist:
einen Transceiver (23); und
einen Prozessor (21),
wobei der Prozessor konfiguriert ist, um:
den Transceiver zu steuern, um einen ersten Rahmen an einen ersten Zugangspunkt, AP, zu übertragen und ansprechend auf den ersten Rahmen einen zweiten Rahmen von dem ersten AP zu empfangen,
wobei der zweite Rahmen Informationen über Nachbar-APs enthält, wenn der erste Rahmen Informationen über eine oder mehrere Betriebsklassen, die von der STA unterstützt werden, und eine Dienstsatzkennung SSID enthält, und
wobei eine SSID der Nachbar-APs mit der in dem ersten Rahmen enthaltenen SSID abgeglichen wird und eine Betriebsklasse der Nachbar-APs mit einer Betriebsklasse abgeglichen wird, die in der einen oder den mehreren von der STA unterstützten Betriebsklassen enthalten ist.

13. Zugangspunkt (10), AP, zur Unterstützung des Abtastens über mehrere Bänder in einem drahtlosen LAN-Kommunikationssystem, wobei der AP aufweist:
einen Transceiver (13); und
einen Prozessor (11),
wobei der Prozessor konfiguriert ist, um:
den Transceiver zu steuern, um einen ersten Rahmen von der STA zu empfangen und ansprechend auf den ersten Rahmen einen zweiten Rahmen an die STA zu übertragen,
wobei der zweite Rahmen Informationen über Nachbar-APs enthält, wenn der erste Rahmen Informationen über eine oder mehrere Betriebsklassen, die von der STA unterstützt werden, und eine Dienstsatzkennung SSID enthält, und
wobei eine SSID der Nachbar-APs mit der in dem ersten Rahmen enthaltenen SSID abgeglichen wird und eine Betriebsklasse der Nachbar-APs mit einer Betriebsklasse abgeglichen wird, die in der einen oder den mehreren von der STA unterstützten Betriebsklassen enthalten ist.

## Revendications

1. Procédé d'exécution de balayage sur de multiples bandes par une station, STA, (20) dans un système de communication sans fil de type réseau local LAN, le procédé comprenant :
l'émission d'une première trame vers un premier point d'accès, AP, (10) ; et
la réception d'une deuxième trame en provenance du premier AP en réponse à la première trame,
dans lequel la deuxième trame inclut des informations relatives à des AP voisins lorsque la première trame inclut des informations relatives à une ou plusieurs classes de fonctionnement prises en charge par la STA et un identifiant d'ensemble de services, SSID, et
dans lequel un SSID des AP voisins est mis en correspondance avec le SSID inclus dans la première trame et une classe de fonctionnement des AP voisins est mise en correspondance avec une classe de fonctionnement incluse dans les une ou plusieurs classes de fonctionnement prises en charge par la STA.

2. Procédé selon la revendication 1, dans lequel un champ de filtre de canal à bandes multiples inclus dans la deuxième trame prend une première valeur lorsque le SSID des AP voisins est mis en correspondance avec le SSID inclus dans la première trame.

3. Procédé selon la revendication 1, dans lequel la deuxième trame inclut un champ d'une ou plusieurs classes de fonctionnement et un champ de numéro de canal des AP voisins.

4. Procédé selon la revendication 1, dans lequel la deuxième trame inclut en outre des informations de décalage de temps d'émission de balise cible, TBTT.

5. Procédé selon la revendication 4, dans lequel le décalage de TBTT a une valeur indiquant une différence de temps entre un TBTT immédiatement précédent du premier AP et un TBTT suivant du deuxième AP.

6. Procédé selon la revendication 1, comprenant en outre un balayage passif pour une découverte des AP voisins en utilisant des informations obtenues par l'intermédiaire de la deuxième trame.

7. Procédé selon la revendication 1, dans lequel la première trame inclut en outre des informations de type de réseau d'accès et la deuxième trame inclut des informations relatives aux AP voisins ayant un type de réseau d'accès correspondant aux informations de type de réseau d'accès incluses dans la première trame.

8. Procédé selon la revendication 1, dans lequel la deuxième trame inclut des informations relatives à un ou plusieurs AP voisins.

9. Procédé selon la revendication 1, dans lequel la première trame et la deuxième trame sont émises et reçues dans une première bande et les AP voisins sont des AP fonctionnant dans une deuxième bande.

10. Procédé selon la revendication 1, dans lequel la première trame est une trame de demande de sonde et la deuxième trame est une trame de réponse de sonde.

11. Procédé de prise en charge de balayage sur de multiples bandes d'une station, STA, (10) par un point d'accès, AP, (20) dans un système de communication sans fil de type réseau local LAN, le procédé comprenant :
la réception d'une première trame en provenance de la STA ; et
l'émission d'une deuxième trame vers la STA en réponse à la première trame,
dans lequel la deuxième trame inclut des informations relatives à des AP voisins lorsque la première trame inclut des informations relatives à une ou plusieurs classes de fonctionnement prises en charge par la STA et un identifiant d'ensemble de services, SSID, et
dans lequel un SSID des AP voisins est mis en correspondance avec le SSID inclus dans la première trame et une classe de fonctionnement des AP voisins est mise en correspondance avec une classe de fonctionnement incluse dans les une ou plusieurs classes de fonctionnement prises en charge par la STA.

12. Station, STA, (20) d'exécution de balayage sur de multiples bandes dans un système de communication sans fil de type réseau local LAN, la STA comprenant :
un émetteur-récepteur (23) ; et
un processeur (21),
dans lequel le processeur est configuré pour :
commander à l'émetteur-récepteur d'émettre une première trame vers un premier point d'accès, AP, et recevoir une deuxième trame en provenance du premier AP en réponse à la première trame,
dans laquelle la deuxième trame inclut des informations relatives à des AP voisins lorsque la première trame inclut des informations relatives à une ou plusieurs classes de fonctionnement prises en charge par la STA et un identifiant d'ensemble de services, SSID, et
dans laquelle un SSID des AP voisins est mis en correspondance avec le SSID inclus dans la première trame et une classe de fonctionnement des AP voisins est mise en correspondance avec une classe de fonctionnement incluse dans les une ou plusieurs classes de fonctionnement prises en charge par la STA.

13. Point d'accès, AP, (10) de prise en charge de balayage sur de multiples bandes dans un système de communication sans fil de type réseau local LAN, l'AP comprenant :
un émetteur-récepteur (13) ; et
un processeur (11),
dans lequel le processeur est configuré pour :
commander à l'émetteur-récepteur de recevoir une première trame en provenance de la STA et émettre une deuxième trame vers la STA en réponse à la première trame,
dans lequel la deuxième trame inclut des informations relatives à des AP voisins lorsque la première trame inclut des informations relatives à une ou plusieurs classes de fonctionnement prises en charge par la STA et un identifiant d'ensemble de services, SSID, et
dans lequel un SSID des AP voisins est mis en correspondance avec le SSID inclus dans la première trame et une classe de fonctionnement des AP voisins est mise en correspondance avec une classe de fonctionnement incluse dans les une ou plusieurs classes de fonctionnement prises en charge par la STA.
